Europäisches Patentamt

European Patent Office

Office européen des brevets

(11) Publication number: 0 325 056
A2

# (12) EUROPEAN PATENT APPLICATION

(21) Application number: 88312238.4

(22) Date of filing: 22.12.88

(51) Int. Cl.4: G11B 9/00

(30) Priority: 22.01.88 US 146999

(43) Date of publication of application:
26.07.89 Bulletin 89/30

(84) Designated Contracting States:
DE FR GB

(71) Applicant: International Business Machines
Corporation
Old Orchard Road
Armonk, N.Y. 10504(US)

(72) Inventor: Arnett, Patrick Clinton,
3225 Oakwood Court
Morgan Hill California 95037(US)
Inventor: Foster, John Stuart
6827 Royalwood Way
San Jose California 95120(US)
Inventor: Frommer, Jane Elizabeth
18610 Castle Hill Drive
Morgan Hill California 95037(US)
Inventor: Reynolds, William Albert, Jr.
4562 Capitola Avenue
San Jose California 95111(US)

(74) Representative: Grant, Iain Murray
IBM United Kingdom Limited Intellectual
Property Department Hursley Park
Winchester Hampshire SO21 2JN(GB)

(54) Data storage devices.

(57) A digital data storage device comprises a conductive probe having a tip closely spaced from, and movable relative to, a flat storage surface exposed to a fluid containing a plurality of discretely attachable molecules. The probe is selectively pulsed to cause molecules to be captured from the fluid and removably attached to selected sites on said surface to write data bits at said sites in the form of surface irregularities. To read the bits so written, the probe and substrate are voltage biased to cause a tunnel electron current to flow between the probe tip and surface; whereupon variations in said current (and/or tip position if the tip is feedback-controlled to maintain a constant distance above the surface) are measured and detected to denote the states of the bits. The bits are selectively erased by energising the probe with a pulse of appropriate voltage, thereby detaching molecules at selected sites without damage to the surface for restoring the surface at said sites substantially to its original flat configuration. A low bias voltage is maintained between the tip and storage surface during reading.

FIG. 3

## DATA STORAGE DEVICES

This invention relates to data storage devices.

There are disclosed herein, as examples thereof direct access storage devices (DASD) wherein data are written by selectively attaching -pinning - molecules to a flat storage surface to create readable data in the form of surface irregularities and data are erased by selectively detaching said molecules without damage to the storage surface.

In conventional DASDs, a magnetic head is airbearing-supported above a rotating disk. Efforts are being continuously made to increase areal density by flying the head closer and closer to the disk, reducing track width, using run length limited codes, etc. Since the discovery of scanning tunnelling microscopy, consideration has been given to using electron tunnelling techniques to achieve a DASD which can provide areal densities in the terabyte/sq.cm. range with access speeds and data rates comparable to those of current DASDs.

The most pertinent art known to applicants is U.S. Patent 4,575,822 which discloses a data storage device in which data are written by establishing physical, electrical or magnetic perturbations in a flat storage surface on a substrate. The data are thereafter read by establishing a tunnelling electron current between the surface and a movable probe. The physical perturbations are created by a physical probe, a focused laser beam, an electron beam or other forms of radiation beams and particle beams, or the perturbations can be created by deposited conductive, insulative or magnetic particles. In each such case, the storage surface is damaged or marred during erasure of the physical perturbation. The only way proposed for erasing physical perturbations is by annealing.

EP-A-0 247 219 also discloses a direct access storage device using electron tunnelling techniques. That device comprises an array of tunnelling probes each of which has its own cantilever beam. Each beam is disposed adjacent to a flat recording surface and operable during orbital movement of said surface to scan a selectable track on a respective microdisk area of said surface and periodically and selectively records information on said surface by moving toward said surface.

There is a need for an improved digital data storage device aimed at achieving densities of over a terabyte/sq.cm. and it is considered that this is obtained in embodiments of the present invention disclosed hereinafter wherein (a) molecules or possibly atoms are selectively attached to a flat substrate to write discrete bits and are selectively detached to erase the bits at the selected site(s) and, without damaging the surface, restore it to its original smoothness, (b) large signal-to-noise ratios can be maintained by taking advantage of the fact that said ratio varies exponentially with bit height, and (c) bits can be written or erased in less than 100 nanoseconds and read in less than 25 nanoseconds.

The present invention provides a data storage device comprising a conductive probe mounted close to a flat, ideally defect free, conductive substrate in a fluid - liquid or gaseous - environment which impinges on the substrate, means for maintaining and controlling selective potential difference levels between the probe and the substrate and means for moving the probe over the substrate, the fluid comprising molecules which can be pinned to the substrate by an elevated potential difference of one polarity between the probe and the substrate at a position defined by the probe position, the impinged surface of the substrate being ideally flat to the order of not more than one quarter of the dimension of a pinned molecule normal to the impinged surface of the substrate, data being written by pinning/not-pinning molecules at given positions and read by altered/unaltered electrical activity in relation to the probe, at the given positions thereof relative to the impinged substrate surface, derived from the presence/absence of a pinnned molecule thereat.

In an embodiment disclosed hereinafter, a digital data storage device is provided comprising a conductive probe and a flat storage surface exposed to a fluid containing a plurality of discretely attachable molecules. The probe and surface are moved relative to each other with the probe tip closely spaced from said surface. The probe is selectively energisable with pulses of a preselected voltage to cause said molecules to be captured from the fluid and removably attached to selected sites on said surface to write data bits at said sites in the form of surface irregularities. To read the bits so written, the probe and substrate are voltage biased to cause a tunnel electron current to flow between the probe tip and surface; whereupon variations in said current (and/or tip position if the tip is feedback-controlled to maintain a constant distance above the surface) are measured and detected to denote the states of the bits. The bits are selectively erased by energising the probe with a pulse of appropriate voltage, thereby detaching molecules at selected sites without damage to the surface for restoring the surface at said sites substantially to its original flat configuration. A low bias voltage is maintained between the probe tip and storage surface during reading; and high voltage pulses are applied to the tips during writing and erasure.

The present invention will be described further hereinafter by way of example with reference to embodiments thereof as illustrated in the accompanying drawings in which:

Fig. 1 is a schematic view depicting the mechanical structure of one form of data storage device according to the invention;

Fig. 2 is an enlarged, side elevational view of an array of conductive probes forming part of the device shown in Fig. 1; and

Fig. 3 is a schematic view depicting the electrical circuitry forming part of the device of Fig. 1.

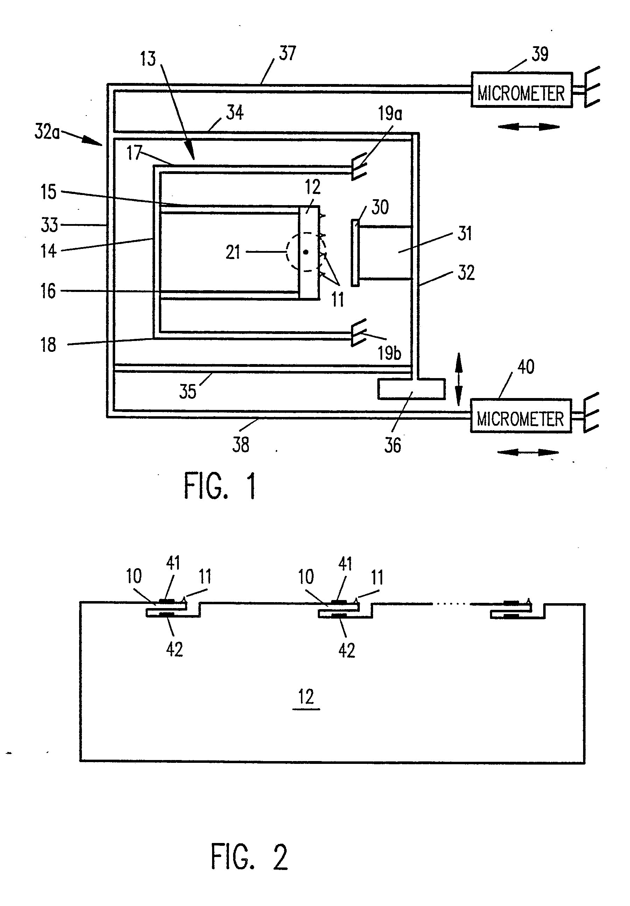

As illustrated in Figs. 1 and 2, the data storage device embodying the invention comprises an array of conductive probes 10. These probes may, for sake of illustration, be in the form of etched cantilevered beams with needle-like tips 11 as illustrated in Fig. 2 and formed in the manner described in "Dynamic Micromechanics on Silicon: Techniques and Devices" in IEEE Transactions on Electron Devices, Vol. ED-25, No. 10, October 1978 at pp. 1241-1250; i.e., etched from a silicon substrate 12 to form the matrix array of cantilevered beams with probe tips.

Substrate 12 preferably constitutes part of a compound leaf spring assemblage 13 of the type described in Fig. 1 of the paper entitled "Design and Assessment of Monolithic High Precision Translation Mechanisms" published in J. Phys. E (GB), Vol. 20, No. 8, pp. 977-983 (August 1987). Briefly, this assemblage 13 is a compound rectilinear spring consisting of two platforms, the primary of which is the substrate 12 and the secondary 14 of which is supported on inner flexible legs 15,16 connected to the substrate and to outer flexible legs 17,18 anchored at 19a,b, respectively. Assemblage 13 controls coarse unidimensional motion in the x direction (i.e., perpendicular to the plane of this paper as viewed in Fig. 1) in response to a driving force derived from a suitable source 21, such as a direct current motor, stepping motor or voice-coil motor.

A substantially flat essentially defect-free storage surface 30 of suitable material is provided on a suitable substrate. The surface 30 is preferably of an atomically flat material such as graphite. As herein used, "atomically flat surface" is defined as one wherein the variation from absolute flatness will not exceed a certain fraction, such as 25%, of the height of the molecular material pinned to the surface. The substrate is mounted to an xyz drive 31 which may comprise piezoelectric tube means of the type commonly used in scanning tunnelling microscopy (STM) devices, such as described in EP-A-0 223 918. Xyz drive 31 is affixed to a platform 32 constituting one side of a rectangular leaf spring assemblage 32a comprising a member 33 parallel to platform 32 and two flexible legs 34,35 which extend in straddling relationship to the legs 17,18 and connect platform 32 and member 33. A source 36, similar to source 21, provides a driving force to platform 32 for controlling coarse unidimensional motion in the y direction (i.e., in the vertical direction as viewed in Fig. 1). These compound leaf spring assemblages 13 and 32a enable large motion (e.g. $10^{-2}$-$10^{-4}$/cm$^2$ ) of the storage surface 30 relative to the probe tips 11.

Another pair of flexible legs 37,38 straddle legs 34,35, respectively, and are connected to member 33 outboard of the points of connection of legs 34,35. The other ends of legs 37,38 are connected to respective micrometers 39,40, which are anchored. Rotation of the micrometers effects coarse unidimensional adjustment in the z direction (i.e., left to right as viewed in Fig. 1) of the storage surface 30 relative to the probe tips 11.

Xyz drive 31 provides fine adjustment of the storage surface 30 relative to the probe tips 11 carried by substrate 12 in the manner described for STM devices in the prior art. Drive 31 controls movement of the storage surface 30 in x, y and z directions in a desired extremely small pattern; e.g., a raster pattern.

Referring now to Fig. 2, the probe tips 11 of the array are independently movable in the z direction as viewed in Fig. 1 by electrostatic forces between their respective electrodes 41,42.

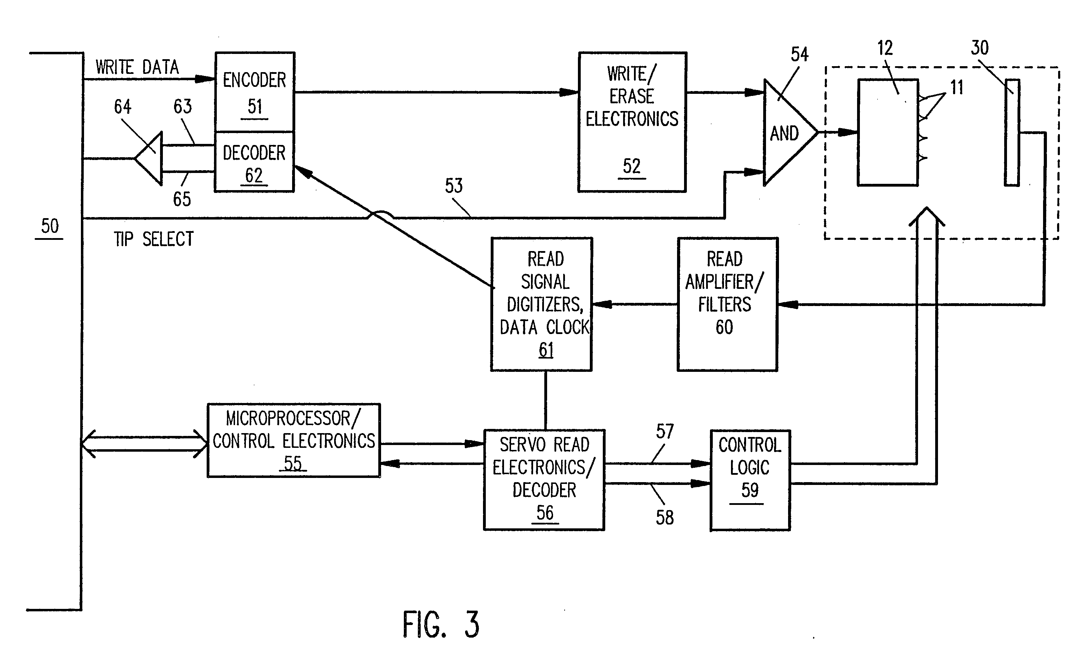

The electrical circuitry for the data storage device may be of the type schematically shown in Fig. 3. As illustrated, drive interface 50 constitutes the means for connection to a suitable external device such as a control unit or CPU (not shown) for sending and receiving control signals and data. Data to be written are passed via interface 50 to an encoder 51 designed to optimise the error rate and bit density of the system. The data are then passed from encoder 51 to write/erase circuitry 52 which comprises drivers to form the voltage pulses of preselected magnitude and polarity for application to a probe tip 11. When a tip select signal comes up in line 53, the output from circuitry 52 is ANDed at 54 and passed to the selected probe tip 11 on substrate 12. (Note that for simplified illustration, the circuitry is shown only for selection of a single probe tip, and that 53 would have to be a bus and 54 a decoder to select out a particular one of the probes of the array).

When the voltage pulse is applied to the selected probe tip 11, a molecule is removably attached - pinned - to storage surface 30 from a molecule-containing fluid contacting said surface, in the manner hereinafter more fully explained.

The electrical circuitry illustrated in Fig. 3 also comprises microprocessor/control electronics 55 interposed between interface 50 and a servo read electronics/decoder 56 which through coarse and fine signal lines 57,58, respectively, conditions control logic 59 to effect coarse and fine motion in the x, y and/or z directions of the probe tips 11 relative to storage surface 50 using the structure described in connection with Fig. 1. As the selected tip 11 passes over the selected bit to be read, the tunnelling current across the tip is changed, amplified at 60, digitised at 61 and transmitted to decoder 62. From decoder 62, decoded data in line 63 are gated out by AND gate 64 responsively to clock pulses in line 65.

Certain locations on storage surface 30 are preselected as a servo pattern area. As the tip passes over these areas, it reads the address location and an off-track signal that provides sufficient information to centre the selected tip 11 over the selected data track. For example, bits at different frequencies may be written at opposite sides of the centre of the nominal track; and the tip, by properly balancing the amplitude of the signal from each of said frequencies, centres the tip within the track.

To change tracks, microprocessor 55 conditions the appropriate drives to effect fine control or coarse and fine control according to the distance to be moved. When the selected tip 11 moves, the servo patterns are read to find the address and then get on track.

The storage surface 30 is preferably rectangular and comprises a plurality of rectangular data blocks. Each data block comprises a series of parallel data tracks, each having a respective servo address pattern adjacent one end thereof.

The x and y coarse controls are used to access a particular block once the z coarse control has adjusted the probe array at a preselected distance (e.g., 10 Angstroms) from the storage surface 30. The piezoelectric means 31 controls the xyz fine movements within the selected block for moving the selected probe tip to the selected track.

In actual test, according to a feature of the invention, a highly oriented pyrolitic graphite was deposited on storage surface 30. After the graphite was cleaved, the surface was covered with a liquid film of di(2-ethylhexyl) phthalate. A low voltage bias of the order of 30 millivolts was applied to the graphite. The resultant current is a sensitive measure of the distance separating the tips from the surface 30. The selected probe tip 11 was raster scanned as above described, under control of the fine motion xyz drive 31 after the coarse controls 21,36 moved the tip array 12 to the selected block. When 100-nanosecond, 3.7 volt-pulses were passed to an electrochemically etched selected probe tip 11 of tungsten during raster scanning, molecules of the liquid were attached to the storage surface 30. The resultant local bumps in said surface denoted, and thereby wrote, bits at the selected locations. These bits measured 27x27 Angstroms and were at least 15 Angstroms high. The freely moving molecules in the liquid acted as an insulating barrier and only the graphite surface 30 was seen by the probe until the selected tip 11 pinned one of the molecules to the surface. This was done in an ambient air environment. It was found that there is a voltage threshold of around 3.5 volts for generating a mark.

To read the bits thus written, a constant voltage was applied to the selected probe tip 11. This voltage was well below the said write voltage threshold of around 3.5 volts. Where bits were written (i.e., molecules attached), there were large current modulations as they were scanned by the selected tip 11. This change in the tunnelling (field-emission) current was amplified and digitised. The current variation was used directly as an indicator of surface height and hence bit presence; however, if preferred, a high frequency feedback system (not shown) could be used to keep the electron current constant and thus indirectly indicate the presence of a bit by sensing the feedback changes necessary to maintain such current constant.

Bits were erased selectively by removing selected molecules from the storage surface 30. This can be achieved by reversing the polarity of the pulse to the selected probe tip 11 if the bond was ionic, using the encoder 51, erase electronics 52, AND gate 54, and signal in line 53. The erasure threshold is roughly equivalent to the writing threshold. It was found that the selected molecule was wholly removed from the graphite storage surface 30, leaving the graphite surface with no visible defect.

Alternatively, selective or extensive erasure of bits on each block can be achieved by use of a focused or flooding ultraviolet beam, which is known to remove molecules from a substrate.

If preferred, ambient fluids containing molecules known as ordered organic systems, such as liquid crystals, Langmuir-Blodgett films, or lipid bilayers, may also be used. This class of materials can be used to provide both the written bits as well as an ordered background substrate due to its inherent two-dimensional ordering. While these molecules are of the same general class of organic chemicals as the phthalates, they offer an additional feature in that they naturally order themselves in two dimensions (e.g., a series of parallel rows) in a thin film over a graphite or other substrate which need not be ordered. This not only aids in reading and writing, but also yields a series of tracks or patterns which can be used to guide the tip 11 along a preselected data channel. We have successfully written bits using the liquid crystal material p-n-octyl-p'-cyanobiphenyl which has a 30 Angstrom spacing between rows or channels.

The precise mechanism by which our novel phenomenon is achieved is not known. Applicants believe that the writing process is associated with the tunnelling electrons having enough energy to activate an adsorbed molecule and/or the graphite surface, resulting in attractive forces between the two. Since the threshold electron energy (about 3.5 electron volts), coincides with a typical single carbon-carbon bond energy, covalent bond cleavage may be involved as part of the pinning process. Alternatively, the bonding might be occurring through dipole-dipole interactions provoked by the tunnelling electrons.

It will thus be seen that if the xyz drive 31 has a useful throw of 10 microns, and the storage density is 70 terabits/cm$^2$, then roughly 10 million bits could be stored within the mechanical range of each probe tip 11. As earlier noted, the storage surface 30 is movable with respect to the probe array for positioning to different blocks. Each block would have identification and servo patterns, made from written bits, as well as data.

With the storage device just described, significant improvement in signal/noise ratios can be achieved because it is dominated by surface height fluctuations. As reported by Binnig and Rohrer, IBM Journal of Research and Development, Vol. 30, July 1986, the tunnelling current is proportional to e$^{-fis}$ where fi is the square root of the effective barrier height for tunnelling between the probe and substrate, and s is their separation. (Barrier height is the energy required to remove an electron from the graphite or tunnelling probe.) If the probe tip is kept at this height as it scans across the substrate, a bit with height z would then have a signal = e$^{-fi(s-z)}$. If the noise is written as an effective height variation dz, then the signal-to-noise is S/N = e$^{fi(z-dz)}$, where fi is in electron volts and z,dz are in Angstroms. This exponential variation of the current with spacing makes our storage device extremely sensitive to topographical changes. The effective barrier height is material dependent. Assuming a barrier height of only .65 electron volts (measured on graphite in air) a bit height of 15 Angstroms, and a noise level of 1 Angstrom, then the S/N is calculated as about 9000, or 79 decibels. If the noise level is significantly higher, or the barrier height lower, additional improvement in S/N can be obtained by using larger, higher molecules.

It should be noted that the voltage bias as actually used in the reduction to practice above described was around 30 millivolts, but bias voltages of 10-150 millivolts have been used. The bias voltage is maintained between the tip 11 and storage surface 30 during reading, and pulsed to higher voltages during writing and selective erasure.

Also, it is to be understood that conductive surfaces other than graphite, and fluids (in either liquid or gaseous state) other than phalate esters, such as di (2-ethylhexyl) phthalate may be used as a coating on, or as an ambient environment for, the storage surface 30, provided they have molecules which preferably are removably attachable to the storage surface; phthalate esters, such as, for example, dimethyl phthalate was also used.

Finally, while the invention has been described in connection with attachment of a single molecule at a selected storage location, because of an apparent reduction in size of the 'pinned bits' from the original size of the individual molecules of the fluid, one cannot rule out the paring of a molecule down to a 1-atom pinned fragment, so it is to be understood that one or more atoms or molecules could be attached, depending upon the fluid used; hence, the term "molecule" as used in the claims is intended generically to cover one or more atoms or molecules. Moreover, the mechanism and electrical circuitry described to indicate how the invention may be implemented is to be considered merely illustrative.

## Claims

1. A data storage device comprising a conductive probe mounted close to a flat, ideally defect free, conductive substrate in a fluid - liquid or gaseous - environment which impinges on the substrate, means for maintaining and controlling selective potential difference levels between the probe and the substrate and means for moving the probe over the substrate, the fluid comprising molecules which can be pinned to the substrate by an elevated potential difference of one polarity between the probe and the substrate at a position defined by the probe position, the impinged surface of the substrate being ideally flat to the order of not more than one quarter of the dimension of a pinned molecule normal to the impinged surface of the substrate, data being written by pinning/not-pinning molecules at given positions and read by altered/unaltered electrical activity in relation to the probe, at the given positions thereof relative to the impinged substrate surface, derived from the presence/absence of a pinnned molecule thereat.

2. A device as claimed in claim 1, wherein written data is detected directly from the current flow in the probe.

3. A device as claimed in claim 1, wherein written data is detected indirectly by regarding the activity required to restore the current flow in the probe.

4. A device as claimed in any preceding claim, wherein the impinged substrate surface is atomically flat.

5. A device as claimed in any preceding claim, wherein the substrate is graphite.

6. A device as claimed in any of claims 1 to 4, wherein the impinged substrate surface is formed of an ordered organic system.

7. A device as claimed in any preceding claim wherein the fluid is a phthalate ester.

8. A device as claimed in claim 7, wherein the fluid is dimethyl phthalate.

9. A device as claimed in claim 7, wherein the fluid is di (2 -ethylhexyl) phthalate.

10. A device as claimed in any of claims 1 to 6, wherein the fluid is an ordered organic system.

11. A device as claimed in claim 10, wherein the fluid is a Langmuir-Blodgett film or a lipid bilayer.

12. A device as claimed in claim 10, wherein the fluid is a liquid crystal.

13. A device as claimed in claim 12, wherein the liquid crystal is p-n-octyl-p'-cyanobiphenyl.

14. A device as claimed in any preceding claim, including means for reversing the polarity of the writing potential difference to unpin pinned molecules, erasing written data.

15. A device as claimed in any preceding claim, including means for maintaining a background potential difference bias at a level lower that the writing potential difference, under which the pinning is stable and which is sufficient to obtain significantly altered current flow in the probe when "over" a pinned molecule.

16. A device as claimed in claim 15, wherein the bias potential difference in in the order of 30 millivolts and the active potential differences are in the order of 3.5 - 3.7 volts.

17. A device as claimed in claim 16, wherein the active potential differences are applied for approximately 100 nanoseconds.

18. A device as claimed in any preceding claim including means for simultaneously unpinning pinned molecules over an area of the impinged substrate surface independently of probe activity.

19. A device as claimed in claim 18, wherein the simultaneous unpinning means is an ultraviolet light source.

FIG. 1

FIG. 2

FIG. 3